# EUROPEAN PATENT SPECIFICATION

(11) **EP 4 180 253 B1**
(45) Date of publication and mention of the grant of the patent: **09.07.2025**
(21) Application number: 22206914.8
(22) Date of filing: 11.11.2022
(51) Int. Cl.: B60J 1/20, B60J 7/00

(54) **BLIND MOUNTING APPARATUS AND METHOD**
BLINDMONTAGEVORRICHTUNG UND -VERFAHREN
APPAREIL ET PROCÉDÉ DE MONTAGE DE STORE

(30) Priority: 12.11.2021 GB 202116299
(43) Date of publication of application: 17.05.2023
(73) Proprietor: Jaguar Land Rover Limited, Coventry, Warwickshire CV3 4LF (GB)
(72) Inventor: Socha, Slawomir, Coventry, CV3 4LF (GB)
(74) Representative: Jaguar Land Rover Patents Department

(56) References cited:
- US-A1- 2019 344 645
- US-A1- 2021 046 810

## Description

### TECHNICAL FIELD

The present disclosure relates to a blind mounting apparatus and method. Aspects of the invention relate to a mounting assembly for mounting a blind cassette; a blind cassette; a blind assembly; a vehicle; and a method of mounting a blind cassette.

### BACKGROUND

It is known to provide a blind cassette in a vehicle to deploy a blind at least partially to cover a window. The blind is stowed on a roller inside in the blind cassette and deployed along guide rails. The blind is typically transferred from a carrier onto the guide rails as it is deployed. Accurate alignment of the blind cassette and the guide rails is required for smooth operation of the blind. However, this may be difficult to achieve due to variations in the components.

It is an aim of the present invention to address one or more of the disadvantages associated with the prior art.

US 2021/046810 A1 discloses a vehicle roof having at least one transparent section, a roof-attached support section and a roller blind assembly for selectively shading the transparent roof section at least partially. The blind assembly includes at least one roller blind unit having a web to be wound up to form a reel and one lateral bearing unit on either side of a vertical longitudinal roof center plane. The reel disposed between two lateral bearing units and the roller blind assembly has a bearing shell on top of which the at least one roller blind unit is fastened via the lateral bearing units which is fixed to the at least one support section from below. Each bearing units has a bearing pedestal fixed to the bearing shell and a roller blind guide element displaceable as against the bearing pedestal in a pre-installation position and fixed to the roof-attached support section in an installation position.

US 2019/344645 A1 discloses a vehicle roof having at least one transparent roof portion, a roof-attached support portion and a roller blind assembly for selectively shading or at least partially exposing the transparent roof portion, the roller blind assembly has at least one roller blind unit comprising a roller blind web, which can be wound up into a roller blind coil, and a lateral bearing element on either side of the vertical longitudinal center plane of the roof. The roller blind coil can be disposed between the two lateral bearing elements. The roller blind assembly may have a bearing shell on top of which the at least one roller blind unit is attached via the lateral bearing elements and which is fixed to the at least one support portion from below.

### SUMMARY OF THE INVENTION

Aspects and embodiments of the invention provide a mounting assembly for mounting a blind cassette; a blind cassette; a blind assembly; a vehicle; and a method of mounting a blind cassette as claimed in the appended claims

According to an aspect of the present invention there is provided a mounting assembly for mounting a blind cassette operative to dispense a blind along a guide rail disposed in a roof structure of a vehicle, the mounting assembly comprising:
a mount for mounting the blind cassette to the vehicle; and
a slide carrier having a carrier section for alignment with the guide rail, the slide carrier being moveable relative to the mount to facilitate alignment of the carrier section with the guide rail;
wherein the mount is configured to receive at least one cassette mounting fastener configured to fasten the mount to the roof structure of the vehicle. The slide carrier is configured to align with an end of the guide rail disposed proximal to the carrier section. The accurate alignment of the slide carrier with the guide rail may facilitate deployment of the blind. The blind may more readily transfer from the carrier section onto the guide rail, for example. The movement of the slide carrier relative to the mount may facilitate alignment during the assembly process;
wherein the slide carrier comprises at least one carrier aperture for receiving the or each cassette mounting fastener;
wherein a first one of the carrier aperture is configured to enable movement of the slide carrier relative to a first cassette mounting fastener along a first axis and to limit movement of the slide carrier relative to the first cassette mounting fastener along a second axis extending perpendicular to the first axis; and a second one of the carrier aperture being configured to enable movement of the slide carrier relative to a second cassette mounting fastener along the first axis and the second axis

The at least one cassette mounting fastener may be disposed in a fixed position. The at least one cassette mounting fastener may be fixedly mounted to a body structure or to a guide rail. The at least one cassette mounting fastener may provide a fixed reference for mounting the blind cassette. At least in certain embodiments, the at least one cassette mounting fastener may be disposed on the guide rail. The at least one cassette mounting fastener may be fastened to the guide rail.

The or each cassette mounting fastener may comprise a threaded fastener, such as a threaded stud.

. The relative movement of the slide carrier facilitates alignment of the slide carrier to the associated guide rail. The slide carrier may comprise first and second carrier apertures for receiving respective first and second cassette mounting fasteners. The first carrier aperture may be configured to restrict or limit movement of the slide carrier relative to a first cassette mounting fastener. The first carrier aperture may constrain or limit relative movement of the slide carrier.. The extent of the relative movement of the slide carrier along the first axis may be restricted. The first carrier aperture may restrict or limit translational movement of the slide carrier relative to the first cassette mounting fastener. The second carrier aperture may be configured to enable movement of the mount slide carrier relative to a second cassette mounting fastener. The second carrier aperture may permit translational movement of the slide carrier relative to the second cassette mounting fastener.. The extent of the relative movement of the slide carrier along the first axis and/or the second axis may be restricted.

At least one mounting aperture may be formed in the mount for receiving the or each first cassette mounting fastener. The or each mounting aperture may be sized to enable movement of the mount relative to the at least one cassette mounting fastener. The or each mounting aperture may be sized to enable translational and/or rotational movement of the mount relative to the at least one cassette mounting fastener.

The first carrier aperture and/or the second carrier aperture may be configured to enable movement of the slide carrier relative to the at least one cassette mounting fastener.

A first said carrier aperture may be configured to restrict or limit movement of the slide carrier relative to the at least one cassette mounting fastener. The first carrier aperture may be sized to cooperate with the cassette mounting fastener. The first carrier aperture may comprise a circular aperture have a diameter which at least substantially matches an external diameter of the cassette mounting fastener. The first mounting aperture may be sized to align the slide carrier relative to a first cassette mounting fastener.

Alternatively, or in addition, a second said carrier aperture may be configured to enable movement of the mount relative to the at least one cassette mounting fastener. The at least one second mounting aperture may comprise an elongated aperture. The at least one second mounting aperture may be sized to enable translational movement of the mount relative to the at least one cassette mounting fastener.

The slide carrier may comprise at least one spring member for engaging an associated cassette mounting fastener. The at least one spring member may engage the cassette mounting fastener releasably to locate the mounting assembly on the at least one cassette mounting fastener. The at least one spring member limits or restricts movement along a central longitudinal axis of the cassette mounting fastener. The at least one spring member may be configured to engage a thread formed on the cassette mounting fastener.

The or each cassette mounting fastener may comprise a threaded member mounted to the vehicle. Alternatively, or in addition, the or each cassette mounting fastener may comprise a threaded member mounted to the guide rail.

The mounting assembly may comprise at least one limiter. The at least one limiter may be provided on at least one of the mount and the slide carrier to limit the movement of the slide carrier relative to the mount.

According to examples disclosed herein, there is provided a mounting assembly for mounting a blind cassette operative to dispense a blind along a guide rail disposed in a vehicle, the mounting assembly comprising:
a mount for mounting the blind cassette to the vehicle; and
a slide carrier having a carrier section for alignment with a proximal end of the guide rail, the slide carrier being moveable relative to the mount to facilitate alignment of the carrier section with the guide rail;
wherein at least one limiter is provided on at least one of the mount and the slide carrier to limit the movement of the slide carrier relative to the mount.

The or each limiter may comprise a projection disposed on one of the mount and the slide carrier. The projection may be located in an aperture formed in the other one of the mount and the slide carrier. The aperture may be larger than the projection along one or more axis to enable relative movement of the slide carrier relative to the mount. The aperture in which the limiter locates may be rectangular, for example.

The mounting assembly may comprise a slide carrier fastener for fastening the slide carrier to the mount.

The slide carrier fastener may be configurable in a partially fastened state to allow movement of the slide carrier relative to the mount.

The slide carrier fastener may be configurable in a fastened state to inhibit movement of the slide carrier relative to the mount.

According to a further aspect of the present invention there is provided a blind cassette comprising at least one mounting assembly as described herein. The blind cassette may comprise first and second of the mounting assemblies. The first and second mounting assemblies may be disposed on respective sides of the blind cassette.

The blind cassette may comprise a cassette housing. The mount may be formed integrally with the cassette housing. The blind cassette may be a dissociated blind.

According to examples disclosed herein, there is provided a mounting assembly for mounting a blind cassette operative to dispense a blind along a guide rail, the mounting assembly comprising:
a mount for mounting the blind cassette; and
a slide carrier having a carrier section for alignment with the guide rail, the slide carrier being moveable relative to the mount to facilitate alignment of the carrier section with the guide rail;
wherein the mount is configured to receive at least one cassette mounting fastener configured to fasten the mount.

According to a further aspect of the present invention there is provided a blind assembly for a vehicle, the blind assembly comprising:
a blind cassette as described herein, the blind cassette having a deployable blind. The blind assembly may comprise at least one guide rail for guiding the blind. One or more cassette mounting fastener may be provided for mounting the blind cassette. The one or more cassette mounting fastener may be fastened to the at least one guide rail or to the vehicle structure, for example a roof structure,

According to a further aspect of the present invention there is provided a vehicle comprising a mounting assembly as described herein.

According to a further aspect of the present invention there is provided a method of mounting a blind cassette on a vehicle, the blind cassette being configured to dispense a blind along guide rails disposed in the vehicle, wherein the blind cassette comprises at least a first mount and at least a first slide carrier, the first mount being moveable relative to the first slide carrier; the method comprising:
locating the first mount and the first slide carrier on at least one cassette mounting fastener disposed on a body structure of the vehicle;
displacing the first slide carrier relative to the first mount to align the first slide carrier with a first one of the guide rails;
fastening a slide carrier fastener to fix the position of the first slide carrier relative to the first mount;
fastening the at least one cassette mounting fastener to fasten the first mount to the vehicle body while maintaining the alignment of the first slide carrier relative to the first mount;
wherein the slide carrier comprises at least one carrier aperture for receiving the or each cassette mounting fastener;
wherein a first one of the carrier aperture is configured to enable movement of the slide carrier relative to a first cassette mounting fastener along a first axis and to limit movement of the slide carrier relative to the first cassette mounting fastener along a second axis extending perpendicular to the first axis; and a second one of the carrier aperture being configured to enable movement of the slide carrier relative to a second cassette mounting fastener along the first axis and the second axis

### BRIEF DESCRIPTION OF THE DRAWINGS

One or more embodiments of the invention will now be described, by way of example only, with reference to the accompanying drawings, in which:
Figure 1 shows a schematic representation of a side elevation of a vehicle comprising a mounting assembly for a blind cassette in accordance with an embodiment of the present invention;

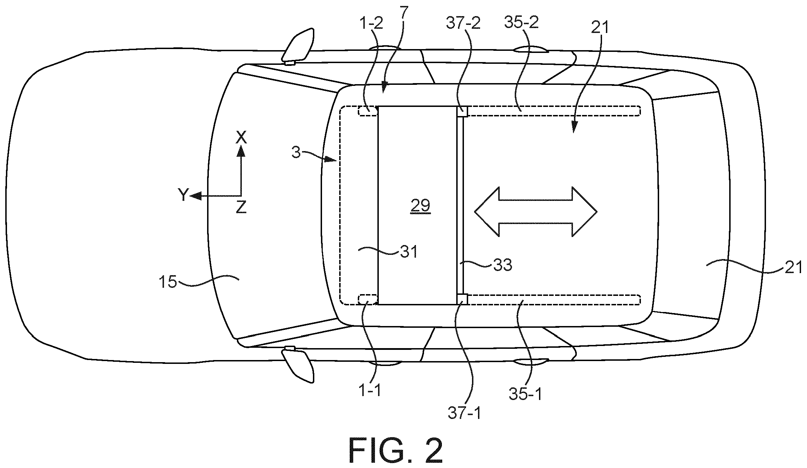

Figure 2 shows a plan view of the vehicle shown in Figure 1;
Figure 3 shows an exploded view of the mounting assembly in accordance with an embodiment of the present invention;
Figure 4 shows a perspective view of the mounting assembly shown in Figure 3;
Figure 5 shows a transverse sectional view through the mounting assembly shown in Figure 3;
Figure 6 shows a longitudinal sectional view through the mounting assembly shown in Figure 3; and
Figure 7 shows a block diagram representing the installation of the mounting assembly.

### DETAILED DESCRIPTION

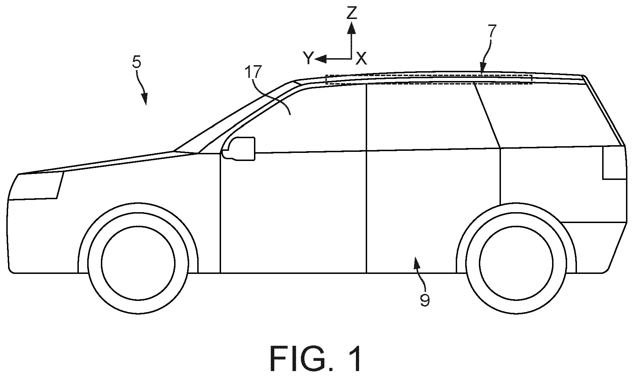

A mounting assembly 1-n for mounting a blind cassette 3 in accordance with an embodiment of the present invention is described herein with reference to the accompanying Figures. The mounting assembly 1-n mounts the blind cassette 3 in a vehicle 5. As shown in Figure 1, the vehicle 5 in the present embodiment is an automobile. The present invention may be employed in other types of vehicle, such as a utility vehicle or a sports utility vehicle. The vehicle 5 is described herein with reference to a frame comprising a transverse axis X, a longitudinal axis Y and a vertical axis Z.

The blind cassette 3 forms part of a blind assembly 7. First and second of the mounting assemblies 1-1, 1-2 are provided to mount the blind cassette 3 to a body structure (denoted generally by the reference numeral 9) of the vehicle 5. The body structure 9 forms a cabin 11 for vehicle occupants. The body structure 9 comprises a roof structure 13 which extends over the cabin 11. The vehicle 5 comprises a front windscreen (windshield) 15, side windows 17, a rear window 19 and a sunroof 21. The sunroof 21 comprises an aperture 23 formed in the roof structure 13. A sunroof window panel 25 is supported by a panel carrier 27 which is mounted to the roof structure 13. The panel carrier 27 may optionally be configured to open and close the sunroof window panel 25. The blind assembly 7 in the present embodiment is associated with the sunroof 21. The blind cassette 3 is operative to deploy a blind 29 at least partially to cover the sunroof window panel 25. The mounting assembly 1-n may be configured to mount a blind cassette 3 associated with other windows in the vehicle 5, such as one of the side windows 17 or the rear window 19.

The blind cassette 3 comprises a cassette housing 31 and a roller (not shown). The roller is mounted inside the cassette housing 31 and is rotatable selectively to retract and deploy the blind 29. A draw member 33 is provided at a leading edge of the blind 29. The draw member 33 extends across a width of the blind 29 and is operative to maintain alignment of the blind 29 relative to the blind cassette 3. A drive mechanism (not shown) is provided for deploying and retracting the blind 29. First and second guide rails 35-1, 35-2 are provided for guiding the blind 29. The first and second guide rails 35-1, 35-2 are disposed on respective first and second sides of the aperture 23 formed in the roof structure 13. The first and second guide rails 35-1, 35-2 extend substantially parallel to each other in a longitudinal direction. The first and second guide rails 35-1, 35-2 could be formed integrally with the body structure 9. However, in the present embodiment, the first and second guide rails 35-1, 35-2 are formed separately and fastened to the roof structure 13. First and second followers 37-1, 37-2 are provided for travelling along the first and second guide rails 35-1, 35-2 respectively. The first and second followers 37-1, 37-2 and the first and second guide rails 35-1, 35-2 have complementary profiles. The blind 29 is connected to the first and second followers 37-1, 37-2. In the present embodiment the first and second followers 37-1, 37-2 are disposed at respective ends of the draw member 33. The blind cassette 3 is aligned with the first and second guide rails 35-1, 35-2 to enable displacement of the first and second followers 37-1, 37-2 onto the first and second guide rails 35-1, 35-2.

A first cassette fastener assembly 39-1 is mounted to a first end portion 40-1 of the first guide rail 35-1; and a second cassette fastener assembly (not shown) is mounted to a second end portion of the second guide rail. The first and second cassette fastener assemblies 39-1 are fixed in position to facilitate alignment of the blind cassette 3 with the first and second guide rails 35-1, 35-2. The first cassette fastener assembly 39-1 comprises at least one first cassette mounting fastener 41-1; and the second cassette fastener assembly comprises at least one second cassette mounting fastener. The first and second mounting fasteners 41-1 are threaded studs in the present embodiment. The first and second mounting fasteners 41-1 are provided for fastening the blind cassette 3 to the roof structure 13. The first and second mounting fasteners 41-1 are fixedly mounted to the first and second guide rails 35-1, 35-2. In the present embodiment the first cassette fastener assembly 39-1 comprises two of the first cassette mounting fasteners 41-1; and the second cassette fastener assembly comprises two of the second cassette mounting fasteners.

As outlined above, first and second of the mounting assemblies 1-1, 1-2 are provided to mount the blind cassette 3. The first and second of the mounting assemblies 1-1, 1-2 are disposed on respective sides of the blind cassette 3. The first and second of the mounting assemblies 1-1, 1-2 have like configurations. For the sake of brevity, the first mounting assembly 1-1 will now be described. It will be understood that the second mounting assembly 1-2 has a like configuration.

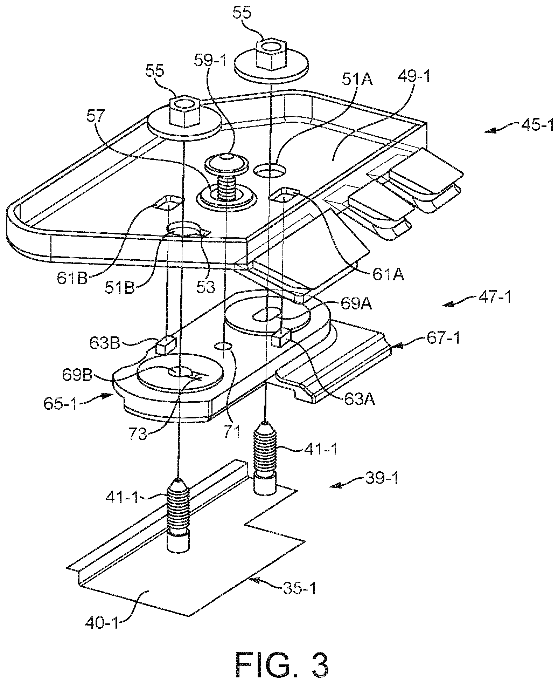

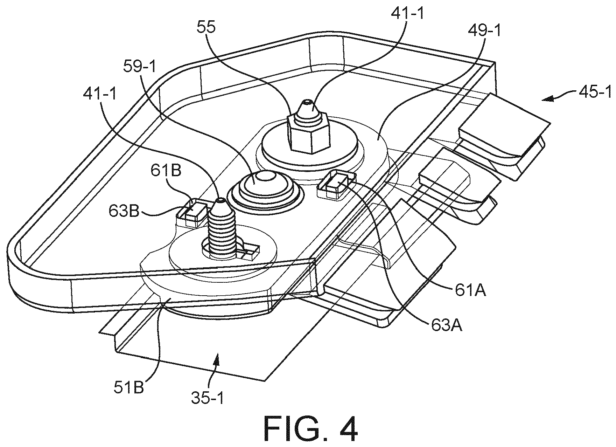

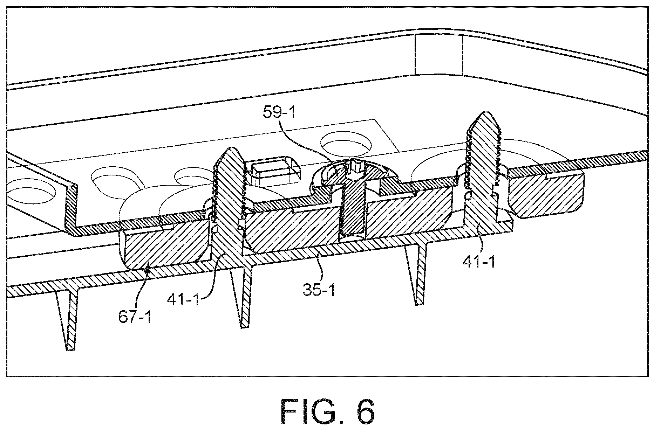

The first mounting assembly 1-1 for mounting the blind cassette 3 will now be described with reference to Figures 3 to 6. The first mounting assembly 1-1 comprises a first mount 45-1 and a first slide carrier 47-1. The first mount 45-1 is connected to the cassette housing 31 of the blind cassette 3. The first mount 45-1 may be formed integrally with the cassette housing 31 or may be formed separately and fastened to the cassette housing 31. The first mount 45-1 is configured to cooperate with the first cassette fastener assembly 39-1 to mount the blind cassette 3 to the roof structure 13. The first mount 45-1 comprises a first mounting plate 49-1 having first and second mounting apertures 51A, 51B for receiving the first cassette mounting fasteners 41-1 provided in the first cassette fastener assembly 39-1. The first mounting aperture 51A has a circular profile for receiving one of the first cassette mounting fasteners 41-1. The second mounting aperture 51B has a keyhole profile comprising a circular portion and a first slot 53. The circular portion of the second mounting aperture 51B is suitable for receiving the other one of the first cassette mounting fasteners 41-1. Other profiles are contemplated for the second mounting aperture 51B. For example, the first slot 53 may be omitted from the second mounting aperture 51B. As shown in Figure 6, the first and second mounting apertures 51A, 51B are larger than the first cassette mounting apertures 41-1. Thus, the first and second mounting apertures 51A, 51B are oversized to accommodates variations in the spacing between the first cassette mounting apertures 41-1, for example due to manufacturing tolerances. First nuts 55 are fastened on the first cassette mounting fasteners 41-1 to mount the first mounting plate 45-1. The first nuts 55 are tightened to create a clamping or sandwich effect to secure the first mounting assembly 1-1. The first nuts 55 are tightened to fix the position of the first slide carrier 47-1 relative to the first mount 45-1. The relative position of the first slide carrier 47-1 relative to the first mount 45-1 is maintained by securing the first nuts 55 on the first and second mounting fasteners 41-1.

The first mounting plate 49-1 comprises a third mounting aperture 57 for receiving a first slide carrier fastener 59-1 for connecting the first mount 45-1 to the first slide carrier 47-1. The first slide carrier fastener 59-1 is operable provisionally to hold or set the position of the first slide carrier 47-1 relative to the first mount 45-1. The first slide carrier 47-1 can be aligned with the first guide rail 35-1 and, once aligned, the first slide carrier fastener 59-1 can be fastened to fix the location of the first slide carrier 47-1 relative to the first mount 45-1. In use, the first slide carrier fastener 59-1 may enable relative movement of the first slide carrier 47-1 and the first mount 45-1 to align the first slide carrier 47-1 with the first guide rail 35-1. The first slide carrier fastener 59-1 may enable rotational movement of the first slide carrier 47-1 relative to the first mount 45-1. The first slide carrier fastener 59-1 may be used to connect the first slide carrier 47-1 to the first mount 45-1 to facilitate handling of the first mount assembly 1-1. The first slide carrier fastener 59-1 in the present embodiment comprises a mechanical fastener, such as a screw. The third mounting aperture 57 is disposed centrally between the centres of the first and second mounting apertures 51A, 51B. The third mounting aperture 57 may be disposed in other locations. The first mounting plate 49-1 comprises first and second limiter apertures 61A, 61B for receiving first and second limiters 63A, 63B provided on the first slide carrier 47-1. The first and second limiter apertures 61A, 61B each have a generally rectangular profile. The first and second limiter apertures 61A, 61B may have different profiles, for example comprising an ellipse, a circle or a stadium.

The first slide carrier 47-1 comprises a first body portion 65-1 and a first carrier section 67-1. The first body portion 65-1 is in the shape of a stadium in the present embodiment. The first body portion 65-1 comprises first and second carrier apertures 69A, 69B for receiving the first cassette mounting fasteners 41-1 provided in the first cassette fastener assembly 39-1. The first carrier aperture 69A is configured to enable movement of the first slide carrier 47-1 relative to the first mount 37-1. The first carrier aperture 69A is configured to enable translational movement of the first slide carrier 47-1 relative to the first mount 37-1 along one or more axis. The first carrier aperture 69A may also accommodate variations in the location of the first cassette mounting fasteners 41-1 relative to each other, for example due to manufacturing tolerances or clearances. Alternatively, or in addition, the first carrier aperture 69A may accommodate manufacturing variations in the shape or profile of the first slide carrier 47-1. In the present embodiment, the first carrier aperture 69A is an elongated aperture or slot. The first carrier aperture 69A is in the shape of a stadium in the present embodiment. The first carrier aperture 69A enables translation of the first slide carrier 47-1 relative to the first mount 37-1 along a longitudinal axis but restricts or prevents relative rotational movement. The second carrier aperture 69B comprises a circular section sized to receive one of the first cassette mounting fasteners 41-1.

The first and second limiters 63A, 63B are provided to limit movement of the first slide carrier 47-1 relative to the first mount 45-1. In the present embodiment, the first and second limiters 63A, 63B are formed on the first body portion 65-1. The first and second limiters 63A, 63B are configured to project into the first and second limiter apertures 61A, 61B formed in the first mounting plate 49-1. The first and second limiters 63A, 63B are smaller than the first and second limiter apertures 61A, 61B to allow the first slide carrier 47-1 to move relative to the first mounting plate 49-1. The first and second limiters 63A, 63B engage the sidewalls of the first and second limiter apertures 61A, 61B to limit or restrict relative movement.

The first body portion 65-1 comprises a third carrier aperture 71 for receiving the first slide carrier fastener 59-1 for connecting the first mount 45-1 to the first slide carrier 47-1. The third carrier aperture 71 is disposed centrally between the centres of the first and second carrier apertures 69A, 69B. The third carrier aperture 71 is a threaded aperture for receiving the first slide carrier fastener 59-1. The first slide carrier fastener 59-1 may pre-assemble the first mount 45-1 and the first slide carrier 47-1. The first slide carrier fastener 59-1 is operative to constrain movement of the first slide carrier 47-1 relative to the first mounting plate 49-1 to in-plane movement. At least in certain embodiments, the first slide carrier fastener 59-1 may constrain relative movement of the first slide carrier 47-1 and the first mounting plate 49-1 to a plane extending perpendicular to a central longitudinal axis of the first cassette mounting fasteners 41-1.

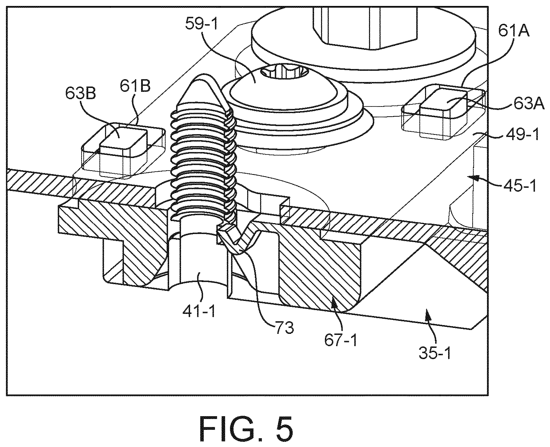

The first slide carrier 47-1 comprises a first spring member 73 for engaging one of the first cassette mounting fasteners 41-1. The first spring member 73 is shown in the transverse sectional view shown in Figure 5. The first spring member 73 is provided to engage the first cassette mounting fastener 41-1 releasably to locate the first slide carrier 47-1 on the first cassette fastener assembly 39-1. The first spring member 73 comprises a spring arm moulded integrally with the first slide carrier 47-1. A distal end of the first spring member 73 locates in the threads of the first cassette mounting fastener 41-1. The first spring member 73 is aligned with the first slot 53 formed in the second mounting aperture 51B. Alternative configurations of the first spring member 53 are envisaged. A second spring member may optionally be associated with the other one of the first cassette mounting fasteners 41-1.

The first carrier section 67-1 is configured to receive the first follower 37-1 when the blind 29 is fully retracted. The first carrier section 67-1 aligns with the first guide rail 35-1 when the first slide carrier 47-1 is mounted to the first cassette fastener assembly 39-1. The first carrier section 67-1 forms a continuation of the first guide rail 35-1. This arrangement may facilitate the transfer of the first follower 37-1 from the first carrier section 65-1 onto the first guide rail 35-1; and/or from the first guide rail 35-1 onto the first carrier section 65-1. In the present embodiment, the first follower 37-1 and the first carrier section 65-1 have at least substantially the same profile in transverse section. Alternatively, or in addition, the first carrier section 67-1 may comprise a guide section for transferring the first follower 37-1 onto the first guide rail 35-1. The guide section may, for example, comprise a ramp or transition for guiding the first follower 37-1 onto the first guide rail 35-1.

The second mounting assembly 1-2 is provided to mount the opposite side of the blind cassette 3. It will be understood that the second mounting assembly 1-2 has a configuration like but opposing that of the first mounting assembly. Accordingly reference numerals as used to describe the first mounting assembly and appended with -1 are appended with -2 when describing the second mounting assembly. It will be appreciated that the -2 reference numerals are thus not shown in the accompanying figures. The second mounting assembly 1-2 is fastened to the second cassette fastener assembly 39-2. The second mounting assembly 1-2 is configured to guide the second follower 37-2 onto the second guide rail 35-2.

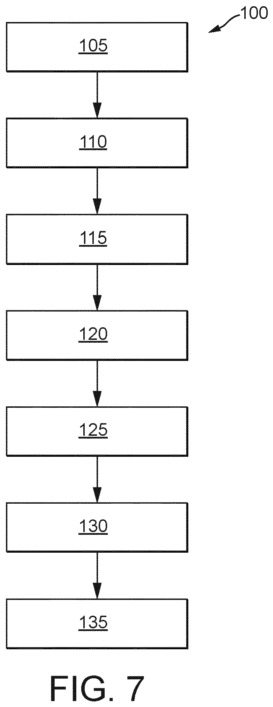

The mounting of the blind cassette 3 on the vehicle 5 will now be described with reference to a first block diagram 100 shown in Figure 7. As described herein, the blind cassette 3 is configured to dispense a blind 29 along first and second guide rails 35-1, 35-2 disposed on the roof structure 13 of the vehicle 5. The blind cassette 3 comprises first and second mounting assemblies 1-1, 1-2. The first mounting assembly 1-1 comprises a first mount 45-1 and a first slide carrier 47-1. The first mount 45-1 is moveable relative to the first slide carrier 47-1. The second mounting assembly 1-2 comprises a second mount 45-2 and a second slide carrier 47-2. The second mount 45-2 is moveable relative to the second slide carrier 47-2. The first and second mounting assemblies 1-1, 1-2 are mounted on first and second cassette fastener assemblies 39-1, 39-2 disposed on the body structure 9 of the vehicle 5. The first and second cassette fastener assemblies 39-1, 39-2 each comprise one or more cassette mounting fastener 41-1, 41-2.

The method comprises provisionally locating the first and second mounting assemblies 1-1, 1-2 of the blind cassette 3 on the first and second cassette fastener assemblies 39-1, 39-2 respectively (BLOCK 105). The first slide carrier 47-1 is positioned against an end of the first guide rail 35-1 to align the first slide carrier 47-1. The first slide carrier 47-1 is moveable relative to the first mount 45-1 to align the first slide carrier 47-1 with the first guide rail 35-1 (BLOCK 110). The second slide carrier is positioned against an end of the second guide rail 35-2 to align the second slide carrier. The second slide carrier is moveable relative to the second mount 45-2 to align the second slide carrier with the second guide rail 35-2 (BLOCK 115). The alignment of the first and second slide carriers 47-1 may be performed concurrently or sequentially. The first slide carrier fastener 59-1 provisionally holds or sets the position of the first slide carrier 47-1 relative to the first mount 45-1 (BLOCK 120). A second slide carrier fastener provisionally holds or sets the position of the second slide carrier relative to the second mount (BLOCK 125). The first nuts 55 are fastened to the first cassette mounting fastener 41-1 to mount the first mount 45-1 to the vehicle body 9 while maintaining the alignment of the first slide carrier 47-1 relative to the first mount 45-1 (BLOCK 130). The second nuts (not shown) are fastened to the second cassette mounting fastener to mount the second mount to the vehicle body 9 while maintaining the alignment of the second slide carrier relative to the second mount (BLOCK 135). The blind cassette 3 is thereby mounted to the vehicle 5. The first and second nuts 55 are tightened to create a clamping or sandwich effect to secure the first mounting assembly 1-1. The first nuts 55 fasten the position of the first slide carrier 47-1 relative to the first mount 45-1.

In the retracted position, the blind 29 engages the first and second slide carriers 47-1, 47-2. In particular, the first and second followers 37-1, 37-2 are disposed on the first and second carrier sections 67-1 of the first and second slide carriers 47-1. The blind 29 is selectively deployed and the first and second followers 37-1, 37-2 are displaced from the first and second carrier sections 67-1 onto the first and second guide rails 35-1, 35-2. Conversely, when the blind 29 is retracted, the first and second followers 37-1, 37-2 are displaced from the first and second guide rails 35-1, 35-2 onto the first and second carrier sections 67-1.

It will be appreciated that various changes and modifications can be made to the present invention without departing from the scope of the present invention as defined by the claims.

## Claims

1. A mounting assembly (1-n) for mounting a blind cassette (3) operative to dispense a blind (29) along a guide rail (35-n) disposed in a roof structure (13) of a vehicle (5), the mounting assembly (1-n) comprising:
a mount (45-n) for mounting the blind cassette (3) to the vehicle (5); and
a slide carrier (47-n) having a carrier section (67-n) for alignment with the guide rail (35-n), the slide carrier (47-n) being moveable relative to the mount (45-n) to facilitate alignment of the carrier section (67-n) with the guide rail (35-n);
wherein the mount (45-n) is configured to receive at least one cassette mounting fastener (41-n) configured to fasten the mount (45-n) to the roof structure (13) of the vehicle (5);
wherein the slide carrier (47-n) comprises at least one carrier aperture (69A, 69B) for receiving the or each cassette mounting fastener (41-n);
**characterised in that**
a first one of the carrier aperture (69A, 69B) is configured to enable movement of the slide carrier (47-n) relative to a first cassette mounting fastener (41-n) along a first axis and to limit movement of the slide carrier (47-n) relative to the first cassette mounting fastener (41-n) along a second axis extending perpendicular to the first axis; and a second one of the carrier aperture (69A, 69B) being configured to enable movement of the slide carrier (47-n) relative to a second cassette mounting fastener (41-n) along the first axis and the second axis.

2. A mounting assembly (1-n) as claimed in claim 1, wherein at least one mounting aperture (51A, 51B) is formed in the mount (45-n) for receiving the or each first cassette mounting fastener (41-n), wherein the at least one second mounting aperture (51A, 51B) is sized to enable movement of the mount (45-n) relative to the at least one cassette mounting fastener (41-n).

3. A mounting assembly (1-n) as claimed in any one of the preceding claims, wherein the slide carrier (47-n) comprises at least one spring member (73) for engaging an associated cassette mounting fastener (41-n) releasably to locate the mounting assembly (1-n) on the at least one cassette mounting fastener (41-n).

4. A mounting assembly (1-n) as claimed in claim 3, wherein the at least one spring member (73) is configured to engage a thread formed on the cassette mounting fastener (41-n).

5. A mounting assembly (1-n) as claimed in any one of the preceding claims, wherein the or each cassette mounting fastener (41-n) comprises a threaded member mounted to the vehicle (5), or a threaded member mounted to the guide rail (35-n).

6. A mounting assembly (1-n) as claimed in any one of the preceding claims, wherein at least one limiter (63A, 63B) is provided on at least one of the mount (45-n) and the slide carrier (47-n) to limit the movement of the slide carrier (47-n) relative to the mount (45-n).

7. A mounting assembly (1-n) as claimed in claim 6, wherein the or each limiter (63A, 63B) comprises a projection disposed on one of the mount (45-n) and the slide carrier (47-n), the projection being located in an aperture (61A, 61B) formed in the other one of the mount (45-n) and the slide carrier (47-n); wherein the aperture is larger than the projection along one or more axis to enable relative movement of the slide carrier (47-n) relative to the mount.

8. A mounting assembly (1-n) as claimed in any one of the preceding claims comprising a slide carrier fastener (59-n) for fastening the slide carrier (47-n) to the mount and, optionally, wherein the slide carrier fastener (59-n) is configurable in a partially fastened state to allow movement of the slide carrier (47-n) relative to the mount.

9. A mounting assembly (1-n) as claimed in claim 8, wherein the slide carrier fastener (59-n) is configurable in a fastened state to inhibit movement of the slide carrier (47-n) relative to the mount.

10. A blind cassette (3) comprising at least one mounting assembly (1-n) as claimed in any one of the preceding claims and, optionally a cassette housing (31), wherein the mount (45-n) is formed integrally with the cassette housing (31).

11. A blind assembly (7) for a vehicle (5), the blind assembly (7) comprising:
a blind cassette (3) as claimed in claim 10, the blind cassette (3) having a deployable blind (29);
at least one guide rail (35-n) for guiding the blind (29); and
one or more cassette mounting fastener (41-n) for mounting the blind cassette (3).

12. A vehicle (5) comprising a mounting assembly (1-n) as claimed in any one of claims 1 to 11.

13. A method of mounting a blind cassette (3) on a vehicle (5), the blind cassette (3) being configured to dispense a blind (29) along guide rails (35-n) disposed in the vehicle (5), wherein the blind cassette (3) comprises at least a first mount (45-n) and at least a first slide carrier (47-n), the first mount (45-n) being moveable relative to the first slide carrier (47-n); the method comprising:
locating the first mount (45-n) and the first slide carrier (47-n) on at least one cassette mounting fastener (41-n) disposed on a body structure of the vehicle (5);
displacing the first slide carrier (47-n) relative to the first mount (45-n) to align the first slide carrier (47-n) with a first one of the guide rails (35-n);
fastening a slide carrier fastener (59-n) to fix the position of the first slide carrier (47-n) relative to the first mount (45-n); and
fastening the at least one cassette mounting fastener (41-n) to fasten the first mount (45-n) to the vehicle (5) body while maintaining the alignment of the first slide carrier (47-n) relative to the first mount (45-n)
wherein the slide carrier (47-n) comprises at least one carrier aperture (69A, 69B) for receiving the or each cassette mounting fastener (41-n);
wherein a first one of the carrier aperture (69A, 69B) is configured to enable movement of the slide carrier (47-n) relative to a first cassette mounting fastener (41-n) along a first axis and to limit movement of the slide carrier (47-n) relative to the first cassette mounting fastener (41-n) along a second axis extending perpendicular to the first axis; and a second one of the carrier aperture (69A, 69B) being configured to enable movement of the slide carrier (47-n) relative to a second cassette mounting fastener (41-n) along the first axis and the second axis

## Patentansprüche

1. Montageanordnung (1-n) zum Montieren einer Rollokassette (3), die betriebsfähig ist, um ein Rollo (29) entlang einer Führungsschiene (35-n) auszugeben, die in einer Dachstruktur (13) eines Fahrzeugs (5) angeordnet ist, wobei die Montageanordnung (1-n) Folgendes umfasst:
eine Halterung (45-n) zum Montieren der Rollokassette (3) am Fahrzeug (5); und
einen Gleitträger (47-n) mit einem Trägerabschnitt (67-n) zur Ausrichtung mit der Führungsschiene (35-n), wobei der Gleitträger (47-n) relativ zur Halterung (45-n) beweglich ist, um die Ausrichtung des Trägerabschnitts (67-n) mit der Führungsschiene (35-n) zu erleichtern;
wobei die Halterung (45-n) konfiguriert ist, um mindestens ein Kassettenmontagebefestigungselement (41-n) aufzunehmen, das konfiguriert ist, um die Halterung (45-n) an der Dachstruktur (13) des Fahrzeugs (5) zu befestigen;
wobei der Gleitträger (47-n) mindestens eine Trägeröffnung (69A, 69B) zum Aufnehmen des oder jedes Kassettenmontagebefestigungselements (41-n) umfasst;
**dadurch gekennzeichnet, dass**
eine erste der Trägeröffnung (69A, 69B) konfiguriert ist, um eine Bewegung des Gleitträgers (47-n) relativ zu einem ersten Kassettenmontagebefestigungselement (41-n) entlang einer ersten Achse zu ermöglichen und eine Bewegung des Gleitträgers (47-n) relativ zu dem ersten Kassettenmontagebefestigungselement (41-n) entlang einer zweiten Achse, die senkrecht zur ersten Achse verläuft, zu begrenzen; und eine zweite der Trägeröffnung (69A, 69B) konfiguriert ist, um eine Bewegung des Gleitträgers (47-n) relativ zu einem zweiten Kassettenmontagebefestigungselement (41-n) entlang der ersten Achse und der zweiten Achse zu ermöglichen.

2. Montageanordnung (1-n) nach Anspruch 1, wobei in der Halterung (45-n) mindestens eine Montageöffnung (51A, 51B) zum Aufnehmen des oder jedes ersten Kassettenmontagebefestigungselements (41-n) ausgebildet ist, wobei die mindestens eine zweite Montageöffnung (51A, 51B) bemessen ist, um eine Bewegung der Halterung (45-n) relativ zu dem mindestens einen Kassettenmontagebefestigungselement (41-n) zu ermöglichen.

3. Montageanordnung (1-n) nach einem der vorstehenden Ansprüche, wobei der Gleitträger (47-n) mindestens ein Federelement (73) zum lösbaren Eingreifen in ein zugehöriges Kassettenmontagebefestigungselement (41-n) umfasst, um die Montageanordnung (1-n) auf dem mindestens einen Kassettenmontagebefestigungselement (41-n) zu positionieren.

4. Montageanordnung (1-n) nach Anspruch 3, wobei das mindestens eine Federelement (73) konfiguriert ist, um in ein Gewinde einzugreifen, das an dem Kassettenmontagebefestigungselement (41-n) ausgebildet ist.

5. Montageanordnung (1-n) nach einem der vorstehenden Ansprüche, wobei das oder jedes Kassettenmontagebefestigungselement (41-n) ein am Fahrzeug (5) montiertes Gewindeelement oder ein an der Führungsschiene (35-n) montiertes Gewindeelement umfasst.

6. Montageanordnung (1-n) nach einem der vorstehenden Ansprüche, wobei mindestens ein Begrenzer (63A, 63B) an mindestens einer von der Halterung (45-n) und dem Gleitträger (47-n) vorgesehen ist, um die Bewegung des Gleitträgers (47-n) relativ zur Halterung (45-n) zu begrenzen.

7. Montageanordnung (1-n) nach Anspruch 6, wobei der oder jeder Begrenzer (63A, 63B) einen Vorsprung umfasst, der an einer von der Halterung (45-n) und dem Gleitträger (47-n) angeordnet ist, wobei sich der Vorsprung in einer Öffnung (61A, 61B) befindet, die in der anderen von der Halterung (45-n) und dem Gleitträger (47-n) ausgebildet ist; wobei die Öffnung entlang einer oder mehrerer Achsen größer ist als der Vorsprung, um eine Relativbewegung des Gleitträgers (47-n) relativ zur Halterung zu ermöglichen.

8. Montageanordnung (1-n) nach einem der vorstehenden Ansprüche, die ein Gleitträgerbefestigungselement (59-n) zum Befestigen des Gleitträgers (47-n) an der Halterung umfasst und optional, wobei das Gleitträgerbefestigungselement (59-n) in einem teilweise befestigten Zustand konfigurierbar ist, um eine Bewegung des Gleitträgers (47-n) relativ zur Halterung zu ermöglichen.

9. Montageanordnung (1-n) nach Anspruch 8, wobei das Gleitträgerbefestigungselement (59-n) in einem befestigten Zustand konfigurierbar ist, um eine Bewegung des Gleitträgers (47-n) relativ zur Halterung zu verhindern.

10. Rollokassette (3), umfassend mindestens eine Montageanordnung (1-n) nach einem der vorstehenden Ansprüche und optional ein Kassettengehäuse (31), wobei die Halterung (45-n) einstückig mit dem Kassettengehäuse (31) ausgebildet ist.

11. Rolloanordnung (7) für ein Fahrzeug (5), wobei die Rolloanordnung (7) Folgendes umfasst:
eine Rollokassette (3) nach Anspruch 10, wobei die Rollokassette (3) ein ausfahrbares Rollo (29) aufweist;
mindestens eine Führungsschiene (35-n) zum Führen des Rollos (29); und
ein oder mehrere Kassettenmontagebefestigungselemente (41-n) zum Montieren der Rollokassette (3).

12. Fahrzeug (5), umfassend eine Montageanordnung (1-n) nach einem der Ansprüche 1 bis 11.

13. Verfahren zum Montieren einer Rollokassette (3) an einem Fahrzeug (5), wobei die Rollokassette (3) konfiguriert ist, um ein Rollo (29) entlang von Führungsschienen (35-n) auszugeben, die im Fahrzeug (5) angeordnet sind, wobei die Rollokassette (3) mindestens eine erste Halterung (45-n) und mindestens einen ersten Gleitträger (47-n) umfasst, wobei die erste Halterung (45-n) relativ zum ersten Gleitträger (47-n) beweglich ist; das Verfahren umfassend:
Positionieren der ersten Halterung (45-n) und des ersten Gleitträgers (47-n) auf mindestens einem Kassettenmontagebefestigungselement (41-n), das an einer Karosseriestruktur des Fahrzeugs (5) angeordnet ist;
Verschieben des ersten Gleitträgers (47-n) relativ zur ersten Halterung (45-n), um den ersten Gleitträger (47-n) mit einer ersten der Führungsschienen (35-n) auszurichten;
Befestigen eines Gleitträgerbefestigungselements (59-n), um die Position des ersten Gleitträgers (47-n) relativ zur ersten Halterung (45-n) zu fixieren; und
Befestigen des mindestens einen Kassettenmontagebefestigungselements (41-n), um die erste Halterung (45-n) an der Karosserie des Fahrzeugs (5) zu befestigen, während die Ausrichtung des ersten Gleitträgers (47-n) relativ zur ersten Halterung (45-n) beibehalten wird
wobei der Gleitträger (47-n) mindestens eine Trägeröffnung (69A, 69B) zum Aufnehmen des oder jedes Kassettenmontagebefestigungselements (41-n) umfasst;
wobei eine erste der Trägeröffnung (69A, 69B) konfiguriert ist, um eine Bewegung des Gleitträgers (47-n) relativ zu einem ersten Kassettenmontagebefestigungselement (41-n) entlang einer ersten Achse zu ermöglichen und eine Bewegung des Gleitträgers (47-n) relativ zu dem ersten Kassettenmontagebefestigungselement (41-n) entlang einer zweiten Achse, die senkrecht zur ersten Achse verläuft, zu begrenzen; und eine zweite der Trägeröffnung (69A, 69B) konfiguriert ist, um eine Bewegung des Gleitträgers (47-n) relativ zu einem zweiten Kassettenmontagebefestigungselement (41-n) entlang der ersten Achse und der zweiten Achse zu ermöglichen

## Revendications

1. Ensemble de montage (1-n) permettant de monter une cassette de store (3) fonctionnant pour distribuer un store (29) le long d'un rail de guidage (35-n) disposé dans une structure de toit (13) d'un véhicule (5), l'ensemble de montage (1-n) comprenant :
une monture (45-n) permettant de monter la cassette de store (3) sur le véhicule (5) ; et
un support de glissière (47-n) présentant une section de support (67-n) destinée à un alignement avec le rail de guidage (35-n), le support de glissière (47-n) étant mobile par rapport à la monture (45-n) pour faciliter un alignement de la section de support (67-n) avec le rail de guidage (35-n) ;
dans lequel la monture (45-n) est conçue pour recevoir au moins une fixation de montage de cassette (41-n) conçue pour fixer la monture (45-n) à la structure de toit (13) du véhicule (5) ;
dans lequel le support de glissière (47-n) comprend au moins une ouverture de support (69A, 69B) permettant de recevoir la ou chaque fixation de montage de cassette (41-n) ;
**caractérisé en ce que**
une première ouverture du support (69A, 69B) est conçue pour permettre le déplacement du support de glissière (47-n) par rapport à une première fixation de montage de cassette (41-n) le long d'un premier axe et pour limiter le déplacement du support de glissière (47-n) par rapport à la première fixation de montage de cassette (41-n) le long d'un second axe s'étendant perpendiculairement au premier axe ; et une seconde ouverture du support (69A, 69B) étant conçue pour permettre le déplacement du support de glissière (47-n) par rapport à une seconde fixation de montage de cassette (41-n) le long du premier axe et du second axe.

2. Ensemble de montage (1-n) selon la revendication 1, dans lequel au moins une ouverture de montage (51A, 51B) est formée dans la monture (45-n) pour recevoir la ou chaque première fixation de montage de cassette (41-n), dans lequel l'au moins une seconde ouverture de montage (51A, 51B) est dimensionnée pour permettre le déplacement de la monture (45-n) par rapport à l'au moins une fixation de montage de cassette (41-n).

3. Ensemble de montage (1-n) selon l'une quelconque des revendications précédentes, dans lequel le support de glissière (47-n) comprend au moins un élément de ressort (73) permettant de mettre en prise une fixation de montage de cassette associée (41-n) de manière libérable pour placer l'ensemble de montage (1-n) sur l'au moins une fixation de montage de cassette (41-n).

4. Ensemble de montage (1-n) selon la revendication 3, dans lequel l'au moins un élément de ressort (73) est conçu pour mettre en prise un filetage formé sur la fixation de montage de cassette (41-n).

5. Ensemble de montage (1-n) selon l'une quelconque des revendications précédentes, dans lequel la ou chaque fixation de montage de cassette (41-n) comprend un élément fileté monté sur le véhicule (5), ou un élément fileté monté sur le rail de guidage (35-n).

6. Ensemble de montage (1-n) selon l'une quelconque des revendications précédentes, dans lequel au moins un limiteur (63A, 63B) est prévu sur au moins l'une parmi la monture (45-n) et le support de glissière (47-n) pour limiter le déplacement du support de glissière (47-n) par rapport à la monture (45-n).

7. Ensemble de montage (1-n) selon la revendication 6, dans lequel le ou chaque limiteur (63A, 63B) comprend une saillie disposée sur l'une de la monture (45-n) et du support de glissière (47-n), la saillie étant située dans une ouverture (61A, 61B) formée dans l'autre de la monture (45-n) et du support de glissière (47-n) ; dans lequel l'ouverture est plus grande que la saillie le long d'un ou de plusieurs axes pour permettre le déplacement relatif du support de glissière (47-n) par rapport à la monture.

8. Ensemble de montage (1-n) selon l'une quelconque des revendications précédentes, comprenant une fixation de support de glissière (59-n) pour fixer le support de glissière (47-n) à la monture et, éventuellement, dans lequel la fixation de support de glissière (59-n) peut être conçue dans un état partiellement fixé pour permettre le déplacement du support de glissière (47-n) par rapport à la monture.

9. Ensemble de montage (1-n) selon la revendication 8, dans lequel la fixation de support de glissière (59-n) peut être conçue dans un état fixé pour inhiber le déplacement du support de glissière (47-n) par rapport à la monture.

10. Cassette de store (3) comprenant au moins un ensemble de montage (1-n) selon l'une quelconque des revendications précédentes et, éventuellement, un boîtier de cassette (31), dans lequel la monture (45-n) est formée d'un seul tenant avec le boîtier de cassette (31).

11. Ensemble de store (7) pour un véhicule (5), l'ensemble de store (7) comprenant :
une cassette de store (3) selon la revendication 10, la cassette de store (3) présentant un store déployable (29) ;
au moins un rail de guidage (35-n) permettant de guider le store (29) ; et
une ou plusieurs fixations de montage de cassette (41-n) permettant de monter la cassette de store (3).

12. Véhicule (5) comprenant un ensemble de montage (1-n) selon l'une quelconque des revendications 1 à 11.

13. Procédé de montage d'une cassette de store (3) sur un véhicule (5), la cassette de store (3) étant conçue pour distribuer un store (29) le long de rails de guidage (35-n) disposés dans le véhicule (5), dans lequel la cassette de store (3) comprend au moins une première monture (45-n) et au moins un premier support de glissière (47-n), la première monture (45-n) étant mobile par rapport au premier support de glissière (47-n) ; le procédé comprenant :
le placement de la première monture (45-n) et le premier support de glissière (47-n) sur au moins une fixation de montage de cassette (41-n) disposée sur une structure de carrosserie du véhicule (5) ;
le déplacement du premier support de glissière (47-n) par rapport à la première monture (45-n) pour aligner le premier support de glissière (47-n) avec un premier rail des rails de guidage (35-n) ;
la fixation d'une fixation de support de glissière (59-n) pour sceller la position du premier support de glissière (47-n) par rapport à la première monture (45-n) ; et
la fixation de l'au moins une fixation de montage de cassette (41-n) pour fixer la première monture (45-n) à la carrosserie du véhicule (5) tout en maintenant l'alignement du premier support de glissière (47-n) par rapport à la première monture (45-n)
dans lequel le support de glissière (47-n) comprend au moins une ouverture de support (69A, 69B) permettant de recevoir la ou chaque fixation de montage de cassette (41-n) ;
dans lequel une première ouverture de l'ouverture de support (69A, 69B) est conçue pour permettre le déplacement du support de glissière (47-n) par rapport à une première fixation de montage de cassette (41-n) le long d'un premier axe et pour limiter le déplacement du support de glissière (47-n) par rapport à la première fixation de montage de cassette (41-n) le long d'un second axe s'étendant perpendiculairement au premier axe ; et une seconde ouverture du support (69A, 69B) conçue pour permettre le déplacement du support de glissière (47-n) par rapport à une seconde fixation de montage de cassette (41-n) le long du premier axe et du second axe
